# EUROPEAN PATENT APPLICATION

(11) **EP 4 769 154 A1**
(43) Date of publication of application: **01.07.2026**
(21) Application number: 25227132.5
(22) Date of filing: 24.12.2025
(51) Int. Cl.: G06F 11/28, G06F 21/52, G06F 21/55, G06F 21/60, G06F 21/72, G06F 21/75, H04L 9/00

(54) **CHIP SECURITY MODULE AND SECURITY ENCRYPTION METHOD**

(30) Priority: 31.12.2024 CN 202411999288
(71) Applicant: Nanjing Silergy Micro Technology Co., Ltd, Nanjing (CN)
(72) Inventor: Liu, Yu, Nanjing (CN); Zhang, Lei, Nanjing (CN); Liu, Rongxin, Nanjing (CN)
(74) Representative: Huang, Liwei

(57) **Abstract**

Provided are a chip security module and a security encryption method. The encryption operation instruction is monitored, and whether the execution process of the encryption operation instruction matches a security sequence is determined. If the execution process of the encryption operation instruction matches the security sequence, the chip security module controls that an execution result is outputted based on the encryption operation instruction. If the execution process of the encryption operation instruction does not match the security sequence, a corresponding action is taken according to application requirements. The security sequence characterizes a preset execution process of the corresponding encryption operation instruction. The present invention improves chip security. Different security sequences are configured for different application needs. Design cost of the chip is reduced.

## Description

### FIELD

The present invention relates to computer technology, and more particularly to a chip encryption module and a security encryption method.

### BACKGROUND

With the development of computer technology, most system-on-chips (SoCs) are equipped with encryption units such as identity authentication. In existing technologies, security modules are usually implemented through a combination of software and hardware, and encryption is achieved by integrating software with the digital system modules of the chip to improve the flexibility of applications. However, there are some vulnerabilities in the existing technologies, resulting in poor security of the security modules. For example, if the software is exposed to third parties through operations such as disassembly, it may lead to the leakage of private keys. Moreover, in existing technologies, the security of security modules is usually ensured by means such as hardwired physical circuits in the chip or firmware state machine of in ROM (Read-Only Memory), which results in relatively single functions. When there are different requirements, it is necessary to redesign the layout of the chip or adopt a dual-core design in the chip, which leads to high costs.

### SUMMARY

Embodiments of the present invention provide a chip encryption module and a security encryption method, which can improve the chip security, reduce the design cost of the chip, and satisfy different application requirements.

One aspect of embodiments of the present invention provides a chip encryption module including an encryption unit. The encryption unit is configured to execute an encryption operation instruction, monitor execution process of the encryption operation instruction, and determine whether the execution process of the encryption operation instruction matches a corresponding security sequence. In response to determining that the execution process of the encryption operation instruction matches the corresponding security sequence, the chip security module controls that an execution result is outputted based on the encryption operation instruction, and in response to determining that the execution process of the encryption operation instruction does not match the corresponding security sequence, a corresponding action is taken according to application requirements. The security sequence is used for characterizing a preset execution process of the corresponding encryption operation instruction.

In one or more embodiments, the encryption unit receives and executes a plurality of sub-instructions extracted from the encryption operation instruction, monitors an execution sequence of the plurality of sub-instructions, and determines whether the execution sequence matches the corresponding security sequence.

In one or more embodiments, the security sequence is determined according to the plurality of sub-instructions extracted from the encryption operation instruction, and the security sequence is stored in the chip security module in advance.

In one or more embodiments, the encryption unit receives and executes a plurality of tag commands extracted from the encryption operation instruction, monitors an execution sequence of the plurality of tag commands, and determines whether the execution sequence matches the corresponding security sequence.

In one or more embodiments, the security sequence is determined according to the plurality of tag commands extracted from the encryption operation instruction, the security sequence is stored in the chip security module in advance, and the tag commands include at least one selected from an input parameter address, an output parameter address, and a base instruction for implementing the encryption operation instruction.

In one or more embodiments, the chip security module further includes a software code unit and a register, the software code unit is configured to extract a plurality of tag commands from the encryption operation instruction, and transmit the plurality of tag commands to the encryption unit through the register, and the encryption unit is configured to execute an encryption operation according to the plurality of tag commands.

In one or more embodiments, the chip security module is further configured to access sequence headers of security sequences according to the current encryption operation instruction, and acquire the security sequence corresponding to the current encryption operation instruction.

In one or more embodiments, the encryption unit includes a processor and a buffer, the processor is configured to acquire the plurality of tag commands from the register, successively execute the plurality of tag commands, and selectively store output parameters of the plurality of tag commands into the buffer.

In one or more embodiments, the encryption unit further includes a hardware monitor configured to monitor an operation state of the processor or the register, and acquire a tag command sequence formed by the plurality of tag commands corresponding to the encryption operation instruction executed by the processor to determine whether the tag command sequence matches the corresponding security sequence.

Another aspect of embodiments of the present invention further provides a security encryption method applied in a chip security module. The method includes: executing an encryption operation instruction, monitoring execution process of the encryption operation instruction, and determining whether the execution process of the encryption operation instruction matches a corresponding security sequence; in response to determining that the execution process of the encryption operation instruction matches the corresponding security sequence, the chip security module controls that an execution result is outputted based on the encryption operation instruction; and in response to determining that the execution process of the encryption operation instruction does not match the corresponding security sequence, a corresponding action is taken according to application requirements. The security sequence is used for characterizing a preset execution process of the corresponding encryption operation instruction.

In one or more embodiments, the executing an encryption operation instruction, monitoring execution process of the encryption operation instruction, and determining whether the execution process of the encryption operation instruction matches a corresponding security sequence includes: receiving and executing a plurality of sub-instructions extracted from the encryption operation instruction, monitoring an execution sequence of the plurality of sub-instructions, and determining whether the execution sequence matches the corresponding security sequence.

In one or more embodiments, the security sequence is determined according to the plurality of sub-instructions extracted from the encryption operation instruction, and the security sequence is stored in the chip security module in advance.

In one or more embodiments, the executing an encryption operation instruction, monitoring execution process of the encryption operation instruction, and determining whether the execution process of the encryption operation instruction matches a corresponding security sequence includes: receiving and executing a plurality of tag commands extracted from the encryption operation instruction, monitoring an execution sequence of the plurality of tag commands, and determining whether the execution sequence matches the corresponding security sequence.

In one or more embodiments, the security sequence is determined according to the plurality of tag commands extracted from the encryption operation instruction, the security sequence is stored in the chip security module in advance, and the tag commands include at least one selected from an input parameter address, an output parameter address, and a base instruction for implementing the encryption operation instruction.

In one or more embodiments, the method further includes: acquiring a tag command sequence formed by a plurality of tag commands corresponding to the encryption operation instruction; accessing the sequence header of at least one security sequence according to the encryption operation instruction, and acquiring the security sequence corresponding to the encryption operation instruction; and determining whether the tag command sequence matches the security sequence corresponding to the encryption operation instruction.

Embodiments of the present invention provide a chip security module and a security encryption method. The execution process of the encryption operation instruction is monitored, and whether the execution process matches a corresponding security sequence is determined. In response to determining that the execution process matches the security sequence, the chip security module controls that an execution result is outputted based on the encryption operation instruction. In response to determining that the execution process does not match the security sequence, a corresponding action is taken according to application requirements. In the present invention, the encryption operation instruction is monitored at the software level, and different security sequences are configured for different application requirements. Therefore. the security of the chip is improved, and designing cost of the chip is reduced.

### BRIEF DESCRIPTION OF THE DRAWINGS

The various features and advantages of the disclosed examples will become apparent to those skilled in the art from the detailed description. The figures that accompany the detailed description can be briefly described as follows:
FIG. 1 is a schematic diagram of a chip security module according to one or more embodiments of the present invention;
FIG. 2 is a schematic diagram of another chip security module according to one or more embodiments of the present invention;
FIG. 3 is a schematic diagram showing a generation process of a group of security sequences according to one or more embodiments of the present invention;
FIG. 4 is a schematic diagram of an encryption unit according to one or more embodiments of the present invention;
FIG. 5 is a flow chart of a monitoring process of a hardware monitor according to one or more embodiments of the present invention; and
FIG. 6 is a flow chart of a security encryption method according to one or more embodiments of the present invention.

### DETAILED DESCRIPTION

The present invention is described below in conjunction with embodiments, but the present invention is not limited to these embodiments. Furthermore, in the following detailed description of the present invention, numerous specific details are set forth in order to provide a thorough understanding of the present invention. However, it may be readily apparent to one skilled in the art that the present invention may be practiced without these specific details. In other instances, well-known methods, procedures, processes, components, structures, and circuits have not been described in detail so as not to unnecessarily obscure aspects of the present invention.

In addition, it should be understood by those skilled in the art, the drawings herein are provided for the purpose of illustration, and the drawings are not necessarily to scale.

Unless otherwise stated, the terms "comprise", "include" and the like in the entire application document shall be interpreted as inclusive rather than exclusive or exhaustive; in other words, the terms mean "include but not limited to".

In the descriptions of the present disclosure, it should be understood that the terms like "first", "second" and the like are used for the purpose of description only, but cannot be considered to indicate or imply relative importance. In addition, in the descriptions of the present disclosure, unless otherwise stated, the meaning of "a plurality of" is two or more.

With the continuous development of chip technology, security chips and SOC chips are generally provided with encryption units such as identity authentication unit. Most of chips adopt a combination of software and hardware to build security modules. While this method improves the flexibility of applications, it also brings obvious security risks because the software lacks security measures. Based on this, embodiments of the present invention provide a chip security module and a security encryption method. Without reducing flexibility advantages brought by the combination of software and hardware, ability of reducing software exposure risks is improved, the security of the chip is improved, and the cost of chip design is reduced.

Embodiments of the present invention are described by taking data encryption operations as an example. It is noted that embodiments of the present invention are also used in data decryption, digital signature, signature verification, and the like. Embodiments of the present invention are not limited to this.

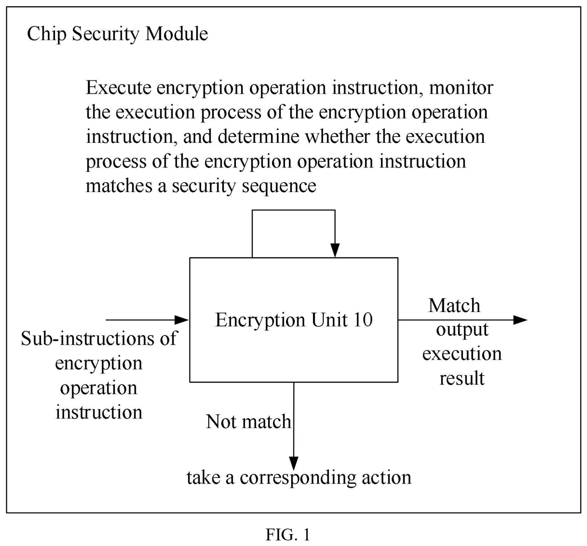

FIG. 1 is a schematic diagram of a chip security module according to one or more embodiments of the present invention. As shown in FIG. 1, the chip security module includes an encryption unit 10. The encryption unit 10 is configured to receive and execute an encryption operation instruction, monitor the execution process of the encryption operation instruction, and determine whether the execution process of the encryption operation instruction matches a corresponding security sequence. In response to determining that the execution process of the encryption operation instruction matches the corresponding security sequence, the chip security module controls that an execution result is outputted based on the encryption operation instruction. In response to determining that the execution process of the encryption operation instruction does not match the corresponding security sequence, the chip security module or another module other than the chip security module takes a corresponding action according to application requirements. The security sequence is used for characterizing a preset execution process of the corresponding encryption operation instruction. In an embodiment, the security sequence is stored in a memory of the chip security module, and the encryption unit 10 reads the security sequence from the memory. In another embodiment, the security sequence is arranged in the encryption unit 10. The storing position of the security sequence is not limited in the present invention.

In an embodiment, the encryption unit 10 receives a plurality of sub-instructions extracted from the encryption operation instruction, executes the plurality of sub-instructions, monitors the execution sequence of the plurality of sub-instructions, and determines whether the execution sequence matches the corresponding security sequence. It is noted that any scheme that the encryption operation instruction is executed by obtaining a plurality of sub-instructions according to the encryption operation instruction is within the protection scope of the present invention. For example, the encryption operation instruction is f=x+y-z, the encryption unit receives sub-instructions split from the encryption operation instruction. For another example, the encryption operation instruction is verification of digital signature, the encryption unit receives sub-instructions that need to be executed when executing the encryption operation instruction.

The security sequence is determined according to at least two of the sub-instructions. In an embodiment, the security sequence is determined according to all the sub-instructions, and a number of the sub-instructions is equal to a number of sequences in the security sequence. In this embodiment, the execution sequences of the sub-instructions are in one-to-one correspondence with the sequences in the security sequence. In another embodiment, the security sequence is determined according to a part of the sub-instructions, and the number of the sequences in the security sequence is less than the number of sub-instructions. In this embodiment, N sub-instructions in the plurality of sub-instructions are in one-to-one correspondence with the sequences in the security sequence, N is greater than or equal to 2. For example, 5 sub-instructions are extracted from the encryption operation instruction, the security sequence includes 3 sequences, so 3 sub-instructions (for example, the first sub-instruction, the second sub-instruction, and the third sub-instruction) in the 5 sub-instructions are in one-to-one correspondence with the 3 sequences in the security sequence. In an embodiment, the sub-instructions that are received and executed by the encryption unit 10 are configured to be tag commands. Optionally, each sub-instruction is configured to be one tag command, and the security sequence is determined according to at least two of the tag commands. Each tag command includes at least one selected from: an input parameter address, an output parameter address, and a base instruction for implementing the encryption operation instruction. In the below embodiments, the tag command includes the input parameter address, the output parameter address, and the base instruction, but the present invention is not limited to this. Each sub-instruction is set as a tag command, and the tag command is transmitted in the communication process. In this way, even if a third party acquires the tag command in the communication process, the third party cannot acquire the specific sub-instruction. It is prevented that an intermediate variable and results of the previous process and subsequent process are acquired by a unit rather than the encryption unit and the private key is derived accordingly. Therefore, the security of the chip security module is improved. In the following embodiments, the sub-instruction is configured as the tag command, but the present invention is not limited to this.

The security sequence is determined according to the sub-instructions extracted from the corresponding encryption operation instruction. Optionally, the sub-instruction is configured to be the tag command. In an embodiment, the security sequence is determined according to the tag commands extracted from the corresponding encryption operation instruction. The encryption operation instruction (for example, the encryption algorithm or verification of digital signature) can be split to at least two base instructions. In the present embodiment, the base instructions, the input parameter addresses and the output parameter addresses of these base instructions are combined to generate at least two tag commands, and then the at least two tag commands are combined to generate the security sequence. In an embodiment, the encryption operation instruction is split to multiple base instructions, all the multiple base instructions are used to generate corresponding tag commands, and all the tag commands are combined to generate the security sequence. In another embodiment, the encryption operation instruction is split to multiple base instructions, some base instructions (for example, main base instructions) of the multiple base instructions are used to generate corresponding tag commands, and these tag commands are combined to generate the security sequence. In this way, the security sequencer of the present invention can characterize a preset execution process of the corresponding encryption operation instruction. Therefore, whether the current execution process is the correct encryption operation sequence is determined by comparing the execution process of the current encryption operation instruction and the preset execution process indicated by the security sequence, and thus, the security of the chip is ensured. In an embodiment, the security sequence is stored in the encryption unit or a memory in the chip security module. In another embodiment, the security sequence is stored in a module in the chip security module other than the encryption unit and the memory. The security sequence is only readable to the chip security module. Once the security sequence is protected and locked up, the security sequence cannot be changed. In some embodiments, the security sequence is written into the chip security module in the chip configuration phase. Different application requirements are satisfied by writing different security sequences. Therefore, satisfying different requirements by changing metal layout of the chip is avoided, time cost is reduced, and manufacturing cost is reduced. In some embodiments, after the chip is in mass production, the security sequence cannot be changed, ensuring the security of the chip.

When the execution process of the encryption operation instruction does not match the corresponding security sequence, a corresponding action is taken according to application requirements, and the corresponding action includes one of or a combination of two or more of: the chip security module controlling that not outputting the execution result based on the current encryption operation instruction, the chip security module or another module other than the chip security module erasing the secret key and/or the private key stored in the chip security module, destroying a memory in the chip security module, halting the chip, and restarting the chip, which ensuring security of the chip and data.

When the execution process of the encryption operation instruction matches the security sequence, the chip security module controls that an execution result is outputted based on the encryption operation instruction. The execution result includes the computing result and/or the computing state of the encryption operation instruction. The computing state is used for characterizing whether the encryption operation instruction has been successfully executed or whether the encryption computing of the encryption operation instruction is successful. If the current encryption operation fails, the encryption operation is executed again, or information is fed back to a main controller, and then the chip security module operates based on the instruction of the main controller, which is not limited in the present invention.

In embodiments of the present invention, the security sequence corresponding to encryption operation instruction required by application requirements is configured in advance. The execution process of the current encryption operation instruction is monitored when the encryption operation instruction is being executed. When the execution process does not match the preconfigured security sequence, a corresponding action is taken to ensure chip security and avoid crack, thereby ensuring data security. In addition, in embodiments of the present disclosure, chip security monitoring is achieved by software configuration. Different security sequences are configured in advance for different application requirements. Therefore, the hardware cost for ensuring chip security is reduced.

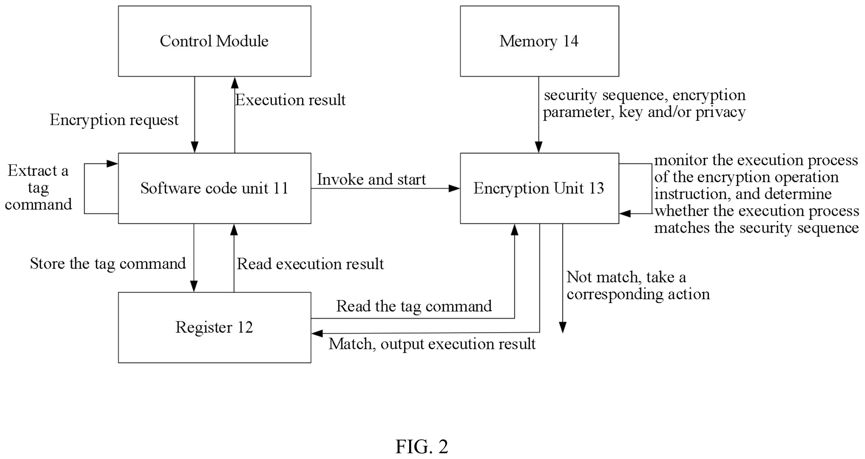

FIG. 2 is a schematic diagram of another chip security module according to one or more embodiments of the present invention. As shown in FIG. 2, the chip security module includes an encryption unit 13 and a memory 14. The memory 14 is configured to store at least one group of security sequences. In some embodiments, the memory 14 is further configured to store the secret key and/or the private key. Further, the memory 14 is a protected and independent storage unit. For example, the memory 14 is a Flash memory. With the memory 14, the security sequence, and the secret key and/or the private key are protected and prevented from being leaked, thereby ensuring data security. In some embodiments, the memory 14 may further store other parameters for encryption. For example, the parameters may be determined according to the encryption algorithm used by different application requirements, which is not limited in the present invention.

Furthermore, the chip security module further includes a software code unit 11 and a register 12. The software code unit 11 and the encryption unit 13 are both connected to the register 12, and are capable of performing read and write operations. In some embodiments, the software code unit 11 is connected to the encryption unit 13, and when the software code unit 11 receives an encryption request, the software code unit 11 invokes and starts the encryption unit 13. The encryption unit 13 is further connected to the memory 14. To perform the encryption operation, the encryption unit 13 reads, from the memory 14, the security sequence, the secret key and/or the private key, and parameters for encryption.

In some embodiments, the chip security module controls the software code unit 11 to communicate with the main controller, and controls the encryption unit 13 to strictly control the output. Therefore, the security sequence, the secret key and/or the private key, and parameters for encryption cannot be obtained through a connection to an external device, and chip security and data security are further ensured. In some embodiments, the main controller is a central processing unit (CPU) of the chip, or the main controller is another processing unit or device, which is not limited in the present invention.

It is noted that, the above connection manners are exemplary, and the present invention does not limit this. For example, the encryption unit 13 autonomously starts to execute the encryption operation instruction by monitoring the state of the register 12. In this example, the encryption unit 13 does not need to be in communication connection with the software code unit 11 and does not communicate with the software code unit 11.

When it needs to perform encryption process on data, the main controller sends an encryption request to the software code unit 11, and the encryption request includes an input parameter and the encryption operation instruction. In one or more embodiments, the input parameter is data to be encrypted. In another embodiment, encryption operation instructions for various types of data to be encrypted are configured in the software code unit 11 in advance, the encryption request includes the data to be encrypted and does not include the encryption operation instruction, and the software code unit 11 acquires the encryption operation instruction according to the type of data to be encrypted in the encryption request.

Further, the software code unit 11 is configured to extract at least two tag commands from the encryption operation instruction, and transmits the at least two tag commands to the encryption unit 13 through the register 12. The encryption unit 13 is configured to execute an encryption operation according to the at least two tag commands.

Further, the software code unit 11 is configured to acquire the encryption operation instruction according to the encryption request, and acquire at least two tag commands from the encryption operation instruction. The software code unit 11 is configured to compile the encryption operation instruction to obtain at least two corresponding base instructions and input and output parameters corresponding to the at least two corresponding base instructions, and generate at least two tag commands including the base instructions, input parameter addresses and output parameter addresses. In some embodiments, the tag command includes an identifier part ID and a data part Data. The identifier part ID is configured to store a base instruction corresponding to a step compiled from the encryption operation instruction, and the data part Data is configured to store corresponding input parameter address and/or output parameter address. The input parameter address and the output parameter address are used for indicating the address where the input parameter is stored and the address where the output parameter is stored. The output parameter includes an intermediate output parameter and an output result. The intermediate output parameter is used for characterizing an output result of a non-last tag command. The output result is used for characterizing the output result of the last tag command, that is, the output result of the encryption operation instruction.

In an embodiment, the register 12 is configured to only transmit the tag command to the encryption unit 13. In another embodiment, the register 12 is configured to transmit the tag command to the encryption unit 13, store or cache the output result and parameters of the encryption operation instruction. The stored or cached parameters of the encryption operation instruction include parameters included by the encryption operation instruction itself (that is, the stored or cached parameters do not include the intermediate output result of the base instruction, the base instruction is obtained by compiling the encryption operation instruction). For example, the stored or cached parameters of the encryption operation instruction include the input parameter. Furthermore, if the register 12 is configured to only transmit the tag command to the encryption unit 13, the chip security module of the present embodiment further includes a parameter register (not shown in FIG. 2) for storing or caching the output result and the parameter of the encryption operation instruction, which facilitates data transmission.

In addition, the software code unit 11 writes the acquired tag commands of the encryption operation instruction into the register 12. After the encryption unit 13 is invoked and started by the software code unit 11, or after the encryption unit 13 is automatically started when finding that the states of the register 12 change, the encryption unit 13 reads the tag commands of the encryption operation instruction from the register 12.

In an embodiment, the encryption unit 13 executes the encryption operation instruction, and monitors the execution process. After the encryption unit 13 is started, the encryption unit 13 reads the corresponding tag command from the register 12, and acquires, from the memory 14, the security sequence corresponding to the encryption operation instruction, parameters, secret key and/or private key for encryption operation. Based on the acquired parameters, secret key and/or private key, the encryption unit 13 executes the tag commands successively (that is, executes the sub-instructions of the encryption operation instruction). The encryption unit 13 also monitors the execution process of the encryption operation instruction, and acquires the sequence of tag commands that have been executed, determines whether the tag command sequence matches the corresponding security sequence to determine whether the execution process of the encryption operation instruction matches the corresponding security sequence. If the execution process of the encryption operation instruction matches the corresponding security sequence, the chip security module controls that an execution result is outputted based on the encryption operation instruction, that is, the chip security module controls the current encryption operation to output the execution result. The outputted execution result is transmitted to the main controller through the register 12 or the parameter register. After the encryption unit 13 executes the encryption operation instruction, the encryption unit 13 writes the execution result into the register 12 or the parameter register. The software code unit 11 reads, from the register 12 or the parameter register, the execution result of the encryption output and transmits the execution result to the main controller. In another embodiment, the main controller directly reads, from the register 12 or the parameter register, the execution result of the encryption request. The method the main controller acquires the execution result is not limited in the present invention. The execution result includes the computing result and/or the computing state of execution of the current encryption operation instruction. The computing state is used for characterizing whether the encryption operation instruction has been successfully executed or whether the encryption computing of the encryption operation instruction is successful. If the execution process of the encryption operation instruction does not match the corresponding security sequence, an action is taken according to practical application requirements. In the present embodiment, when the execution process of the encryption operation instruction matches the security sequence, it means that the tag commands in the security sequence are all in the executed tag command sequence, and the sequence of the tag commands in the security sequence is same as the sequence of the tag commands in the executed tag command sequence.

In some embodiments, the security sequence is determined in advance according to the tag commands extracted from the corresponding encryption operation instruction, and is stored in the memory 14. The security sequence includes a sequence header Group Header, a data part Data, and an ending indicator End.

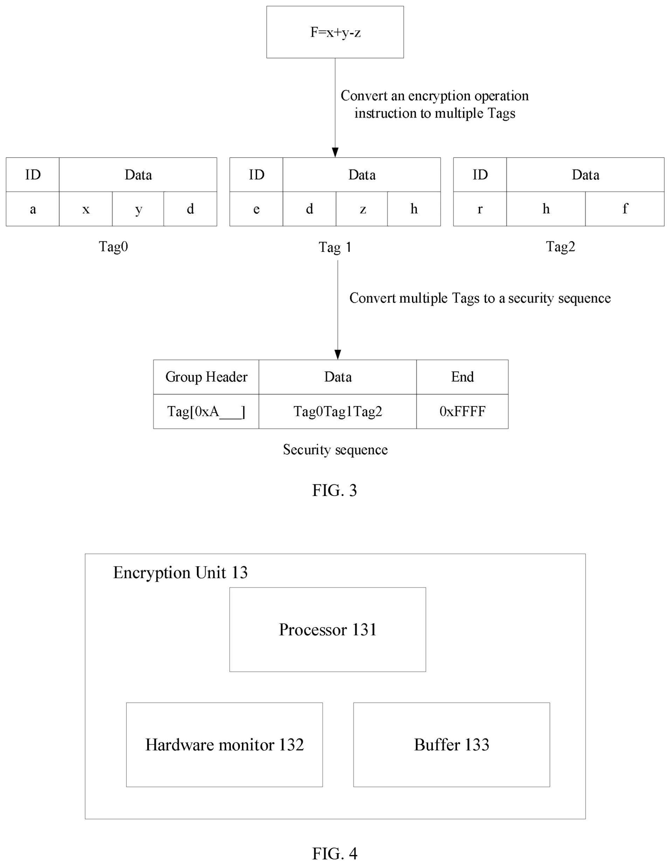

FIG. 3 is a schematic diagram showing a generation process of a security sequence according to one or more embodiments of the present invention. In the example embodiment shown in FIG. 3, the encryption operation instruction is f=x+y-z. In the present embodiment, the encryption operation instruction is divided into multiple tag commands Tag. For example, the encryption operation instruction f=x+y-z is divided into 3 tag instructions: Tag0(a, x, y, d), Tag1(e, d, z, h), Tag2(r, h, f). Next, Tag0, Tag1, and Tag2 are sequenced and combined as the data part of the security sequence. Tag0 denotes operation d=x+y, a denotes an add instruction, x and y are addresses of two input parameters of the add instruction, and d denotes the address for storing the intermediate output parameter of the operation x+y. Tag1 denotes operation h=d-z, e denotes a subtraction instruction, d and z are addresses of two input parameters of the subtraction instruction, and h denotes the address for storing the intermediate output parameter of the operation d-z. Tag2 denotes operation of reading data stored in the address h and storing the data into an address f in the register, r denotes a read instruction, and f is the register address. Next, the security sequence is generated based on Tag0(a, x, y, d), Tag1(e, d, z, h), Tag2(r, h, f). As shown in FIG. 3, the security sequence includes a sequence header (Tag[0xA_]), the sequence data part (Tag0Tag1Tag2), and an ending indicator (0xFFFF). The sequence header is configured to identify the encryption operation instruction corresponding to the security sequence, and the sequence data part is formed by the tag commands extracted from the encryption operation instruction.

In some embodiments, after generating the security sequence based on the above method, the security sequence, the secret key and/or the private key, and the parameters for encryption are all stored in the memory 14 for implementing the subsequent encryption operation and security monitoring. It is noted that the present invention does not limit the format of the tag command and the storage format of the security sequence as long as they can achieve monitoring and comparing.

In an embodiment, the memory 14 is a non-volatile memory, for example, a Flash memory, or the memory 14 is a one-time programmable memory, for example, eFuse. The memory 14 is not limited in the present invention. After the security sequence, the secret key and/or the private key, and the parameters for encryption are stored in the memory 14, the memory 14 enters a protected and locked state, any rewriting operation is not allowed, and the memory 14 is readable only to the encryption unit 13, thereby ensuring security of chip and data.

In practical applications, the chip may perform various tasks, and these tasks involve different encryption operation instructions. Therefore, in the above embodiments, the sequence headers are arranged to be in one-to-one correspondence with the encryption operation instructions, and the sequence headers are configured to identify different security sequences for different encryption operation instructions. In an embodiment, the chip has fewer function, the chip security module executes only one type of encryption operation instruction, and the memory 14 stores only one security sequence. In this case, the sequence header and the ending indicator may be omitted, and the security sequence includes only the data part, thereby saving storage space and improving loading efficiency.

In some embodiments, the chip security module is further configured to access the sequence headers of the security sequences according to the current encryption operation instruction, and acquire the security sequence corresponding to the current encryption operation instruction. In some embodiments, the encryption unit 13 monitors the execution process of the encryption operation instruction, that is, when the tag commands of the encryption operation instruction are executed, the encryption unit 13 acquires the executed tag command sequence, the encryption unit 13 accesses the sequence headers of the security sequences in the memory 14 based on the encryption operation instruction corresponding to the executed tag command sequence to acquire the security sequence corresponding to the current encryption operation instruction, and compares the executed tag command sequence and the security sequence. In another embodiment, another security monitoring module is provided, the security monitoring module acquires the executed tag command sequence from the encryption unit 13, accesses the sequence headers of the security sequences in the memory 14 based on the current encryption operation instruction to acquire the security sequence corresponding to the current encryption operation instruction, and compares the executed tag command sequence and the security sequence.

FIG. 4 is a schematic diagram of the encryption unit 13 according to one or more embodiments of the present invention. In an example embodiment, the encryption unit 13 monitors the encryption process of the encryption operation instruction. As shown in FIG. 4, the encryption unit 13 includes a processor 131, a hardware monitor 132, and a buffer 133.

The processor 131 is configured to acquire at least two tag commands from the register 12, sequentially execute the at least two tag commands, and selectively store output parameters of the at least two tag commands into the buffer 133. For example, the processor 131 stores the output parameters of the non-last tag commands (the at least two tag commands excluding the last tag command) into the buffer 133. The output parameters of which tag commands are stored in the buffer 133 is determined according to practical application requirements, and is not limited in the present invention. The processor 131 reads the tag command from the register 12. The processor 131 acquires the input parameter according to the input parameter address in the tag command. The processor 131 reads from the memory 14 the security sequence, the secret key and/or the private key, and the parameters for encryption. The processor 131 obtains output parameters by performing computation on the input parameters based on the secret key and/or the private key, the parameters for encryption, and the base instruction in the tag command. The processor 131 stores the output parameters to the position indicated by the output parameter address. For different tag commands, the output parameter may be the intermediate output parameter or the output result. The intermediate output parameter is the output result of the non-last tag command, and the output result is the output result of the last tag command. The intermediate output parameter address is stored in the buffer 133.

In some embodiments, the buffer 133 is a buffer region or other storage region capable of satisfying requirements, which is not limited in the present invention. The buffer 133 has access restrictions and is accessible only within the encryption unit 13. Therefore, it is prevented that intermediate variables and various results are acquired by an external device or the third-party and the secret key and/or the private key is decrypted. As a result, data security is improved.

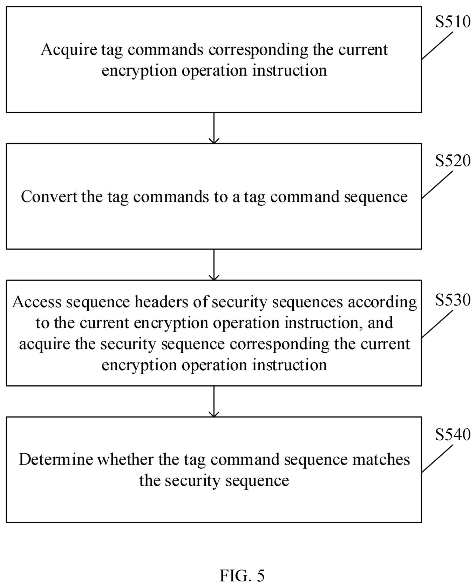

In the execution process of the processor 131, the hardware monitor 132 continuously monitors the operation state of the register 12 and/or the processor 131, so as to prevent the software code unit 11 from being invaded. FIG. 5 is a schematic diagram showing the monitoring process of the hardware monitor 132. As shown in FIG. 5, the monitoring process includes the following steps.

In step S510, the tag commands corresponding to the currently executed encryption operation instruction are acquired. The tag commands are acquired by monitoring the operation state of the register 12 and/or the processor 131. In some embodiments, the tag commands are acquired by only monitoring the operation state of the register 12, or only monitoring the operation state of the processor 131. In some embodiments, the tag commands are acquired by monitoring the operation state of both the register 12 and the processor 131 to ensure the reliability of the monitored data, which is not limited in the present invention.

In step S520, the tag commands are converted into a tag command sequence. The process of forming the tag command sequence is analogous to the process of forming the data part of the security sequence, and is not described in details.

In step S530, the sequence headers of the security sequences are accessed according to the currently executed encryption operation instruction to acquire the security sequence corresponding to the currently executed encryption operation instruction.

In step S540, whether the tag command sequence matches the security sequence is determined. Since the data part of the security sequence is formed by the tag commands extracted from the corresponding encryption operation instruction, the data part of the security sequence is the tag command sequence in the ideal condition. In an embodiment, the encryption unit 13 asynchronously executes the encryption operation instruction and monitoring. That is, the encryption unit 13 determines the tag command sequence in real time in the execution process of the encryption operation instruction, and sequentially compares the tag commands in the tag command sequence with the security sequence. When the tag command sequence does not match the security sequence, the encryption unit 13 stops the execution of the encryption operation instruction or other actions. In another embodiment, the encryption unit 13 acquires the complete tag command sequence corresponding to the executed encryption operation instruction after the execution of the encryption operation instruction is completed, and determines whether the tag command sequence matches the security sequence. The specific compare method is not limited in the present invention, and may be configured according to practical application.

In some embodiments, step S530 and step S540 are executed by the hardware monitor, or are executed by another unit, such as an additional digital hardware unit, which is not limited in the present invention.

In some embodiments, the security sequence is formed by important ones (for example, the main base instructions in the encryption operation instruction) of all tag commands extracted from the encryption operation instruction. In this case, the security sequence may include a part of the tag command sequence, and the hardware monitor 132 sets a different matching rule for this security sequence to satisfy different requirements. For example, the matching rule is whether the security sequence matches at least a part of the tag command sequence.

If the tag command sequence does not match the security sequence, it is indicated that the software code unit has been exposed to an invader. The invader wants to calculate the secret key and/or the private key according to the output result of the encryption operation. Then the chip needs to take a corresponding action according to practical application requirements to protect the output result and ensure data security. In some embodiments, the action which is taken in response to the hardware monitor 132 finding that the tag command sequence and the security sequence do not match includes: not outputting the execution result based on the current encryption operation, erasing the secret key and/or the private key stored in the chip security module, destroying the memory 14, halting the chip, and/or restarting the chip. In practical applications, one or more of the above actions may be adopted and applied in the chip according to the security level and the important level of the chip. Alternatively, other action other than the above action may be adopted and applied in the chip according to practical condition, which is not limited in the present invention.

If the hardware monitor 132 monitors that the tag command sequence matches the security sequence, the execution result is outputted, and the software code unit 11 reads the execution result and feeds back. The execution result includes a computing result and/or computing state. The computing state indicates whether the present computing is successful or whether the present computing has been successfully executed. In some embodiments, to feed back the encryption result, the encryption unit 13 writes the output result into the register 12 in the form of tag command, or the encryption unit 13 directly writes the output result into the parameter register.

In an embodiment, if the encryption operation fails, the software code unit 11 re-executes the encryption operation, or the software code unit 11 feeds back information to the main controller and operates according to the instruction of the main controller, which is not limited in the present invention.

In embodiments of the present invention, the execution process of the encryption operation instruction is monitored, and whether the execution process matches the corresponding security sequence is determined. If it is determined that the execution process of the current encryption operation instruction matches the corresponding security sequence, the execution result is outputted based on the current encryption operation instruction. If it is determined that the execution process of the current encryption operation instruction does not match the corresponding security sequence, a corresponding action is taken according to practical application requirements. The security sequence is used for characterizing a preset execution process of the corresponding encryption operation instruction. Therefore, embodiments of the present invention improve chip security. Since the monitoring is in the software level, different security sequences are configured for different application requirements, and the design cost of the chip is reduced.

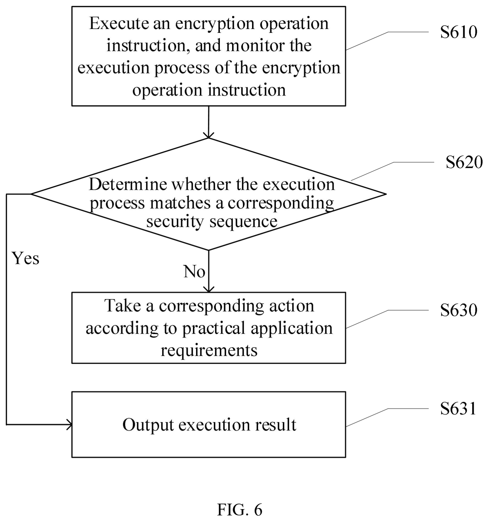

FIG. 6 is a flow chart of a security encryption method according to one or more embodiments of the present invention. Embodiments of the present invention further provide a security encryption method applied in a chip security module. As shown in FIG. 6, the security encryption method includes the following steps.

In step S610, the encryption operation instruction is executed, and the execution process of the encryption operation instruction is monitored.

In step S620, whether the execution process matches the corresponding security sequence is determined. The security sequence is used for characterizing a preset execution process of the corresponding encryption operation instruction.

In response to determining that the execution process does not match the security sequence, step S630 is executed. In response to determining that the execution process matches the security sequences, step S631 is executed. In step S630, an action corresponding to practical application requirements is taken.

In step S631, the execution result is outputted based on the current encryption operation instruction.

In an embodiment, step 610 includes: a plurality of sub-instructions extracted from the encryption operation instruction are received, the plurality of sub-instructions are executed, and the execution sequence of the plurality of sub-instructions is monitored.

In an embodiment, the number of the plurality of sub-instructions is equal to the number of the sequences in the security sequence, and the execution sequence of the plurality of sub-instructions is in one-to-one correspondence with the sequences in the security sequence. In another embodiment, the security sequence is determined according to at least two of the plurality of sub-instructions, and the number of the plurality of sub-instructions is greater than the number of the sequences in the security sequence. In an embodiment, each sub-instruction is configured as a tag command. For example, each sub-instruction is configured as one tag command. The tag command includes at least one selected from an input parameter address, an output parameter address, and a base instruction for executing the encryption operation instruction.

The security sequence is determined according to the sub-instructions extracted from the corresponding encryption operation instruction. For example, the sub-instruction is configured in form of the tag command. In an embodiment, the security sequence is determined according to the tag commands extracted from the corresponding encryption operation instruction. The tag commands include at least one selected from an input parameter address, an output parameter address, and a base instruction for executing the encryption operation instruction. The input parameter address denotes the storage position of the input parameter, and the output parameter address denotes the storage position of the output parameter. The tag command does not include specific value of the parameter. The output parameter address includes an intermediate output parameter address and an output result address. The intermediate output parameter address and the output result address are directed to different storage units. The intermediate output parameter address is used for indicating where the output result of the non-last tag command is stored. External devices cannot read and write the storage unit corresponding to the intermediate output parameter address. The output result address is used for indicating where the output result of the last tag command is stored, and the output result of the last tag command is the output result of the encryption operation instruction.

The encryption operation instruction (e.g., encryption algorithm) is split into at least two base instructions. In the present embodiment, each base instruction and its corresponding input and output parameters are combined to generate the tag command, and at least two tag commands are combined to generate the security sequence. In an embodiment, all the base instructions split from the encryption operation instruction are converted into corresponding tag commands, and all the tag commands are combined to generate the security sequence. In another embodiment, some base instructions (for example, main base instructions in the encryption operation instruction) of the base instructions split from the encryption operation instruction are converted into corresponding tag commands, and these tag commands are combined to generate the security sequence. In view of the above, the security sequence in embodiments of the present invention characterizes a preset execution process of the corresponding encryption operation instruction. By comparing the execution process of the current encryption operation instruction and the preset execution process indicated by the security sequence to determine whether the current execution process is the correct encryption operation sequence, the chip security is ensured.

In an embodiment, the execution of the encryption operation instruction includes: receiving an encryption request, and executing an encryption operation instruction corresponding to the encryption request in response to the received encryption request.

In an embodiment, the security sequence includes a sequence header, a sequence data part, and an ending indicator. The sequence header is used for identifying the encryption operation instruction corresponding to the security sequence. The sequence data part is formed by tag commands extracted from the corresponding encryption operation instruction, and is used for characterizing a preset execution process of the tag commands (i.e., the preset execution process of the corresponding encryption operation instruction).

In an embodiment, the determination of whether the execution process match the corresponding security sequence further includes: acquiring a tag command sequence corresponding to the encryption operation instruction, accessing the sequence heads of the security sequences and finding the security sequence corresponding to the current encryption operation instruction according to the current encryption operation instruction. Acquiring at least two tag commands corresponding to the current encryption operation instruction, generating the tag command sequence, and determining whether the tag command sequence matches the corresponding security sequence.

In an embodiment, at least one selected from the security sequence, the secret key and/or the private key, and the parameter for encryption is independently stored in a memory. The action which is taken when the execution process does not match the corresponding security sequence includes one or more of: not outputting the execution result based on the encryption operation instruction, erasing the secret key and/or the private key stored in the chip security module, destroying a memory in the chip security module, halting a chip, and restarting the chip.

In an embodiment, when the execution process matches the corresponding security sequence, an execution result is outputted based on the encryption operation instruction. The execution result includes a computing result and/or a computing state of the execution of the present encryption operation instruction. The computing state is used for characterizing whether the encryption operation instruction has been successfully executed or whether the encryption computing of the encryption operation instruction is successful. If the current encryption operation fails, the encryption operation is executed again, or information is fed back to a main controller, and then the chip security module operates based on the instruction of the main controller, which is not limited in the present invention.

In embodiments of the present invention, the execution process of the encryption operation instruction is monitored, and whether the execution process matches the corresponding security sequence is determined. If it is determined that the execution process of the current encryption operation instruction matches the corresponding security sequence, the execution result is outputted based on the encryption operation instruction. If it is determined that the execution process of the current encryption operation instruction does not match the corresponding security sequence, a corresponding action is taken according to practical application requirements. The security sequence is used for characterizing a preset execution process of the corresponding encryption operation instruction. Therefore, embodiments of the present invention improve chip security. Since the monitoring is in the software level, different security sequences are configured for different application requirements, reducing the design cost of the chip.

The foregoing are merely exemplary embodiments of the present invention and are not intended to limit the present invention. For those skilled in the art, various modifications and changes may be made to the present application. Any modification, equivalent replacement, improvement, etc. made within the spirit and principle of the present invention shall be included in the protection scope of the present invention.

## Claims

1. A chip security module, comprising: an encryption unit, wherein the encryption unit is configured to execute an encryption operation instruction, monitor execution process of the encryption operation instruction, and determine whether the execution process of the encryption operation instruction matches a corresponding security sequence,
in response to determining that the execution process of the encryption operation instruction matches the corresponding security sequence, the chip security module controls that an execution result is outputted based on the encryption operation instruction, and
in response to determining that the execution process of the encryption operation instruction does not match the corresponding security sequence, a corresponding action is taken according to application requirements,
wherein the security sequence is used for characterizing a preset execution process of the corresponding encryption operation instruction.

2. The chip security module according to claim 1, wherein the encryption unit receives and executes a plurality of sub-instructions extracted from the encryption operation instruction, monitors an execution sequence of the plurality of sub-instructions, and determines whether the execution sequence matches the corresponding security sequence.

3. The chip security module according to claim 2, wherein the security sequence is determined according to the plurality of sub-instructions extracted from the encryption operation instruction, and the security sequence is stored in the chip security module in advance.

4. The chip security module according to claim 1, wherein the encryption unit receives and executes a plurality of tag commands extracted from the encryption operation instruction, monitors an execution sequence of the plurality of tag commands, and determines whether the execution sequence matches the corresponding security sequence.

5. The chip security module according to claim 4, wherein the security sequence is determined according to the plurality of tag commands extracted from the encryption operation instruction, and the security sequence is stored in the chip security module in advance,
wherein the tag commands comprise at least one selected from an input parameter address, an output parameter address, and a base instruction for implementing the encryption operation instruction.

6. The chip security module according to any of claims 1 to 5, wherein the chip security module further comprises a software code unit and a register,
the software code unit is configured to extract a plurality of tag commands from the encryption operation instruction, and transmit the plurality of tag commands to the encryption unit through the register, and
the encryption unit is configured to execute an encryption operation according to the plurality of tag commands.

7. The chip security module according to any of claims 1 to 6, wherein the chip security module is further configured to access sequence headers of security sequences according to a current encryption operation instruction, and acquire the security sequence corresponding to the current encryption operation instruction.

8. The chip security module according to claim 6, wherein the encryption unit comprises a processor and a buffer, the processor is configured to acquire the plurality of tag commands from the register, successively execute the plurality of tag commands, and selectively store output parameters of the plurality of tag commands into the buffer.

9. The chip security module according to claim 8, wherein the encryption unit further comprises a hardware monitor configured to monitor an operation state of the processor or the register, and acquire a tag command sequence formed by the plurality of tag commands corresponding to the encryption operation instruction executed by the processor to determine whether the tag command sequence matches the corresponding security sequence.

10. A security encryption method applied in a chip security module, wherein the method comprises:
executing an encryption operation instruction, monitoring execution process of the encryption operation instruction, and determining whether the execution process of the encryption operation instruction matches a corresponding security sequence;
in response to determining that the execution process of the encryption operation instruction matches the corresponding security sequence, controlling that an execution result is outputted based on the encryption operation instruction; and
in response to determining that the execution process of the encryption operation instruction does not match the corresponding security sequence, a corresponding action is taken according to application requirements,
wherein the security sequence is used for characterizing a preset execution process of the corresponding encryption operation instruction.

11. The security encryption method according to claim 10, wherein the executing an encryption operation instruction, monitoring execution process of the encryption operation instruction, and determining whether the execution process of the encryption operation instruction matches a corresponding security sequence comprises:
receiving and executing a plurality of sub-instructions extracted from the encryption operation instruction, monitoring an execution sequence of the plurality of sub-instructions, and determining whether the execution sequence matches the corresponding security sequence.

12. The security encryption method according to claim 11, wherein the security sequence is determined according to the plurality of sub-instructions extracted from the encryption operation instruction, and the security sequence is stored in the chip security module in advance.

13. The security encryption method according to claim 10, wherein the executing an encryption operation instruction, monitoring execution process of the encryption operation instruction, and determining whether the execution process of the encryption operation instruction matches a corresponding security sequence comprises:
receiving and executing a plurality of tag commands extracted from the encryption operation instruction, monitoring an execution sequence of the plurality of tag commands, and determining whether the execution sequence matches the corresponding security sequence.

14. The security encryption method according to claim 13, wherein the security sequence is determined according to the plurality of tag commands extracted from the encryption operation instruction, and the security sequence is stored in the chip security module in advance,
wherein the tag commands comprise at least one selected from an input parameter address, an output parameter address, and a base instruction for implementing the encryption operation instruction.

15. The security encryption method according to claim 10, wherein the method further comprises: acquiring a tag command sequence formed by a plurality of tag commands corresponding to the encryption operation instruction; accessing the sequence header of at least one security sequence according to the encryption operation instruction, and acquiring the security sequence corresponding to the encryption operation instruction; and determining whether the tag command sequence matches the security sequence corresponding to the encryption operation instruction.
